# EUROPÄISCHE PATENTANMELDUNG

(11) **EP 4 635 658 A1**
(43) Veröffentlichungstag der Anmeldung: **22.10.2025**
(21) Anmeldenummer: 25170011.8
(22) Anmeldetag: 11.04.2025
(51) Int. Cl.: B23B 51/02, B23B 51/06

(54) **FLACHBOHRER**

(30) Priorität: 18.04.2024 DE 102024110944
(71) Anmelder: Gühring KG, 72458 Albstadt (DE)
(72) Erfinder: Christine, Riester, 72488 Sigmaringen (DE)
(74) Vertreter: Winter, Brandl - Partnerschaft mbB

(57) **Zusammenfassung**

Es ist ein Flachbohrer (1) mit einem Schaft (6) und einem Schneidteil (8) mit stirnseitigen Hauptschneiden (16) bereitgestellt, die sich jeweils in einer Ebene quer zur Bohrerachse (3) von einer Schneidenecke (22) in die Bohrermitte erstrecken. Der Flachbohrer (1) weist genau drei Hauptschneiden (16) auf, die an der Bohrerachse (3) zusammenlaufen.

## Beschreibung

Die Erfindung betrifft einen Flachbohrer nach dem Oberbegriff des Anspruchs 1.

Derartige Flachbohrer sind in vielfacher Gestalt im Einsatz. Sie erstrecken sich entlang einer Längsmittelachse bzw. Bohrerachse und weisen einen Schaft sowie einen Schneidteil auf. Üblicherweise hat der Schneidteil zwei Schneidstege, die jeweils einen Schneidkeil mit einer Hauptschneide bilden. Die Hauptschneide des Schneidkeils wird dabei aus Schnittlinie einer Spanfläche, über die der Span in eine sich entlang des Flachbohrers, insbesondere unter einem Drallwinkel wendelförmig, verlaufende Spannut abläuft, und einer Freifläche gebildet. Flachbohrer der genannten Art zeichnen sich dadurch aus, dass die Hauptschneiden unter einem Spitzenwinkel von 180° zueinander angeordnet sind. Die Hauptschneiden liegen somit in einer Ebene. Im Gegensatz zu Bohrern, deren Spitzenwinkel kleiner als 180° ist und die beim Bohren in ein Werkstück ein Bohrloch mit kegelförmigem Grund ausbilden, können mit einem Flachbohrer Sacklöcher mit ebenem Lochgrund erzeugt werden. Die Hauptschneiden verlaufen jeweils radial nach außen bis zu einer Schneidenecke, wo sie in eine für die Nachbearbeitung der Bohrung vorgesehene Nebenschneide übergehen, an die in Umfangsrichtung des Bohrers eine Führungsfase anschließt. Im Bereich der Bohrermitte können die Hauptschneiden über eine Querschneide miteinander verbunden sein. Alternativ kann eine mittige Zentrumsspitze bzw. ein Zentrierabschnitt vorgesehen sein, die bzw. der das Anbohren beim Bohren ins Volle erleichtert.

So ist beispielsweise aus der EP 1 748 859 B1 ein als Spiralbohrer ausgebildeter Flachbohrer mit zwei Hauptschneiden und zwei sich entlang einer Längsmittelachse wendelförmig erstreckenden Spannuten bekannt. Die zwei Hauptschneiden bilden eine gemeinsame über eine Querschneide verbundene durchgehende Schneide, die in einer Ebene senkrecht zur Längsmittelachse verläuft. Die beiden Hauptschneiden sind daher unter einem Winkel von 180° zueinander orientiert, wodurch sich ein Bohrlochgrund ergibt, der vollständig eben und plan ist. Die Hauptschneiden sind geradlinig ausgebildet und liegen - bis auf einen geringen durch die Querschneide bedingten Versatz - im Wesentlichen auf einer Linie. Zur Korrektur des Spanwinkels der Hauptschneide ist im Sinne einer zuverlässigen Spanabfuhr eine Ausspitzung vorgesehen, die die an die Hauptschneide angrenzende Spanfläche definiert, und sich über die gesamte Länge der Hauptschneide, d.h. von der Querschneide bis zum Schneideneck erstreckt. In Abhängigkeit des zu bohrenden Materials wird ein Spanwinkel zwischen -8° bis +10° eingestellt. Ein negativer Spanwinkel der Hauptschneide erzeugt einen schabenden Schnitt und kann die Stabilität des Bohrers erhöhen, kann aber beispielsweise die Zentrierung im Werkstück verschlechtern. Ein positiver Spanwinkel kann die Zentrierung des Bohrers erleichtern, jedoch zu einer instabileren Hauptschneide führen.

Die Druckschrift DE 10 2007 040 178 B4 schlägt in Fig. 5 einen Flachbohrer mit zwei bezüglich einer Längsmittelachse des Bohrers punktsymmetrischen Hauptschneiden vor, die sich jeweils von einer Schneidenecke bis zu einer Querschneide erstrecken. Der Flachbohrer weist eine Abflachung auf, die die Querschneide verkürzt und den Verlauf der Hauptschneiden in einem mittleren Bereich des Flachbohrers so verändert, dass Zentrumsschneiden entstehen, die sich ausgehend von den ursprünglich vorhandenen Hauptschneiden bis zur Querschneide erstrecken. Die Hauptschneiden und Zentrumsschneiden weisen jeweils zwei abgewinkelte Freiflächen sowie eine Spanfläche auf. In der in Fig. 5 der DE 10 2007 040 178 B4 gezeigten Ausführungsform liegen die Hauptschneiden und Zentrumsschneiden in einer auf einer Längsmittelachse senkrecht stehenden Ebene, so dass sich ein Spitzenwinkel von 180° ergibt. Die Hauptschneiden liegen in Bohrerdrehrichtung gesehen jeweils ca. 5 % bis 15 % vor einer die Längsmittelachse und die jeweilige Schneidenecke enthaltenen Ebene.

Es besteht im Bereich der Flachbohrer allgemein ein Bedarf, die Stabilität der Flachbohrer und damit deren Lebensdauer zu erhöhen. Gleichzeitig ist es wünschenswert, den Flachbohrer besser zu zentrieren und die Spanabfuhr zu verbessern.

Der Erfindung liegt ausgehend von dem in der EP 1 748 859 B1 gezeigten Flachbohrer daher die Aufgabe zugrunde, einen Flachbohrer bereitzustellen, der eine erhöhte Lebensdauer aufweist, sich einfacher zentrieren lässt und die Spanabfuhr verbessert.

Diese Aufgabe kann durch einen Flachbohrer mit den Merkmalen des Anspruchs 1 gelöst werden. Die Unteransprüche betreffen vorteilhafte Ausgestaltungen.

Der Flachbohrer weist einen Schaft und einen Schneidteil mit stirnseitigen Hauptschneiden auf, die sich jeweils in einer Ebene quer zur Bohrerachse von einer Schneidenecke in die Bohrermitte erstrecken. Der Flachbohrer kann drei Hauptschneiden haben, die an der Bohrerachse zusammenlaufen.

Der Flachbohrer kann daher in gewohnter Weise einen, insbesondere zylindrischen, Schaft und einen Schneidteil aufweisen, entlang dessen Längsmittelachse bzw. Bohrerachse sich den drei Hauptschneiden zugeordnete drei Spannuten, insbesondere unter einem Drallwinkel wendelförmig, erstrecken. Parallel und angrenzend zu jeder Spannut kann sich ein Steg erstrecken, der an einer Stirnseite des Flachbohrers einen Schneidkeil bildet. Der Schneidkeil wird durch eine Spanfläche und eine Freifläche definiert, deren Schnittlinie die Hauptschneide bildet. Ein zwischen der Spanfläche der Hauptschneide und einer zur Bearbeitungsfläche senkrecht stehenden Werkzeugbezugsebene gebildeter Winkel wird als axialer Spanwinkel bezeichnet. Der Spanwinkel kann positiv, 0° oder negativ sein und hat unter anderem einen Einfluss auf die bearbeitete Oberfläche, den Spanfluss, die Schnittkraft und Reibung zwischen dem Bohrer und dem zu bearbeitenden Werkstück. Ein zwischen der Freifläche und einer der Bearbeitungsfläche entsprechenden Schneidenebene gebildeter Winkel wird das Freiwinkel bezeichnet. Große Freiwinkel können die Reibung zwischen dem Flachbohrer und dem Werkstück verringern, verkleinern jedoch den Keilwinkel und können daher den Verschleiß erhöhen. Kleine Freiwinkel können den Schneidkeil stabilisieren und den Verschleiß verringern, erhöhen jedoch die Reibung zwischen dem Spiralbohrer und dem Werkstück. Die Summe aus Spanwinkel, Freiwinkel und Keilwinkel ergibt immer 90°. Jede Hauptschneide erstreckt sich radial nach außen bis zu der Schneidenecke, wo sie in eine für die Nachbearbeitung der Bohrung vorgesehene Nebenschneide übergeht, an die in Umfangsrichtung eine Führungsfase anschließt. Ein zwischen der Spanfläche der Nebenschneide und einer zur Bearbeitungsfläche senkrecht stehenden Werkzeugbezugsebene gebildeter Winkel wird als radialer Spanwinkel bezeichnet.

Im Bohrprozess leisten insbesondere die Hauptschneiden den Hauptteil der Zerspanungsarbeit und sind daher den höchsten Belastungen ausgesetzt. Durch das Bereitstellen von drei Hauptschneiden wird die Belastung auf die drei Hauptschneiden verteilt. Im Vergleich zu herkömmlichen Flachbohrern mit zwei Hauptschneiden, wie er beispielsweise aus der EP 1 748 859 B1 bekannt ist, verringert sich die Belastung je Hauptschneide im Bohrprozess von 50 % auf 33,33 % und nimmt somit je Hauptschneide um 33,33 % ab. Durch die geringere Belastung erhöht sich die Standzeit des Flachbohrers und damit seine Lebensdauer. Des Weiteren kann der Flachbohrer durch die zusätzliche dritte Hauptschneide im Bohrprozess besser zentriert werden, was zu präziseren Bohrungen führt. Schließlich ermöglicht die dritte Hauptschneide schnellere Bohrgeschwindigkeiten und eine effizientere Spanabfuhr, da die zusätzliche Hauptschneide Späne brechen und das Spanmaterial schneller entfernen kann, wodurch das Risiko von Verstopfungen und einer Überhitzung des Flachbohrers verringert wird.

Die stirnseitigen Hauptschneiden des Flachbohrers können sich in einer Ebene erstrecken, die auf der Längsmittelachse bzw. Bohrerachse senkrecht steht bzw. quer zur Längsmittelachse bzw. Bohrerachse liegt, und an der Bohrerachse zusammenlaufen. Der Flachbohrer hat also keine Zentrierspitze, wie sie bei herkömmlichen Flachbohrern durchaus üblich ist. Der Flachbohrer ist insgesamt in der Lage, zuverlässig und in gleichbleibend hoher Qualität Sacklöcher mit ebenem Lochgrund ins volle Material zu bohren.

Die Hauptschneiden können, in Bohrerdrehrichtung gesehen, jeweils zumindest teilweise vor einer die Bohrerachse und die jeweilige Schneidenecke enthaltenden Ebene liegen (diese Lage wird in der Fachsprache als "vor Mitte" bezeichnet, während eine Lage hinter der vorgenannten Ebene als "hinter Mitte" bezeichnet wird) und der Verlauf der Hauptschneiden kann im Bereich des Bohrerkerns jeweils durch eine Ausspitzung korrigiert sein. Insbesondere können die Hauptschneiden in einem durch die Ausspitzung gestalteten inneren Hauptschneidenabschnitt vor Mitte liegen.

Durch die Anordnung der Hauptschneiden, die in Bohrerdrehrichtung gesehen jeweils zumindest teilweise vor einer Ebene liegen, die die Bohrerachse und die jeweilige Schneidenecke enthalten, erhöht sich die Stabilität des Bohrers sowie seine Neigung zu Vibrationen, wodurch sich die Bohrqualität insgesamt erhöht.

Durch die Ausspitzung der Hauptschneiden im Bereich des Bohrerkerns wird einerseits deren Verlauf sowie die Spannuten bzw. die Spanwinkel korrigiert. Durch die Ausspitzung kann sich ein, in einer Stirnansicht des Flachbohrers gesehener, abgewinkelter Verlauf jeder Hauptschneide ergeben, die einen ersten Hauptschneidenabschnitt, der sich ausgehend von der Bohrerachse, an der die Hauptschneiden in einem Punkt zusammenlaufen, bis zum Beginn der Ausspitzung erstreckt, sowie einen zum ersten Hauptschneidenabschnitt abgewinkelten zweiten Hauptschneidenabschnitt im Bereich der Ausspitzung aufweist. Durch die Ausspitzung kann sich der Spanwinkel jeder Hauptschneide so ändern, dass er beispielsweise negativ oder weniger positiv ist als ohne die Ausspitzung. Wenn der Spanwinkel negativ oder weniger positiv ist als ohne die Ausspitzung erhöht sich in diesem Bereich der Keilwinkel des Schneidkeils und damit die Stabilität der Hauptschneide. Die Neigung des Bohrers zum Verrutschen oder Verlaufen kann sich verringern, insbesondere bei der Bearbeitung von harten oder schwer zu bearbeitenden Materialien. Des Weiteren ist die Gefahr eines Schneidenabbruchs verkleinert, wodurch sich die Standzeit des Flachbohrers erhöht. Schließlich kann der Flachbohrer mit höheren Schnittgeschwindigkeiten betrieben werden, was zu einer Verringerung der Bearbeitungszeit führt.

In einer Ausführungsform verlaufen die Hauptschneiden von den Ausspitzungen in Richtung der Schneidenecken jeweils sichelförmig. Der sichelförmig verlaufende Hauptschneidenabschnitt kann vor oder hinter Mitte liegen.

Ein sichelförmiger Verlauf der Hauptschneide von der Ausspitzung in Richtung der Schneidenecke bewirkt eine Spanlenkung in Richtung Bohrerkern, wodurch die Spanabfuhr verbessert ist, und reduziert die Reibung zwischen dem Bohrer und dem zu bearbeitenden Werkstück, wodurch während des Bohrvorgangs die Wärmeentwicklung und das Risiko einer Überhitzung und eines Schneidenbruchs reduziert wird. Des Weiteren kann eine sichelförmige Hauptschneide dazu beitragen, dass sich der Flachbohrer besser im Werkstück zentriert und kein Verrutschen oder Verlaufen des Flachbohrers stattfindet. Insgesamt kann ein Flachbohrer mit sichelförmiger Hauptschneide von der Ausspitzung in Richtung der Schneidenecke eine höhere Bohrqualität mit einer glatteren Oberfläche und weniger Gratbildung erzielen.

Wenn die Hauptschneiden eines Flachbohrers jeweils durch eine Ausspitzung korrigiert sind und von der Ausspitzung in Richtung der jeweiligen Schneidenecke sichelförmig verlaufen, kann jede Hauptschneide einen ersten Hauptschneidenabschnitt, der sich ausgehend von der Bohrerachse, an der die Hauptschneiden in einem Punkt zusammenlaufen, bis zum Beginn der Ausspitzung erstreckt, einen zum ersten Hauptschneidenabschnitt abgewinkelten zweiten Hauptschneidenabschnitt im Bereich der Ausspitzung, sowie einen von der Ausspitzung bis zur Schneidenecke sichelförmig verlaufenden dritten Hauptschneidenabschnitt aufweisen.

**In** einer weiteren Ausführungsform kann der Flachbohrer an die Hauptschneiden angrenzende Spanflächen aufweisen, die im Bereich von der Ausspitzung bis zu den Schneidenecken jeweils einen positiven axialen Spanwinkel haben.

Durch den positiven axialen Spanwinkel wird die Spanabfuhr verbessert, wodurch sich die Gefahr von Verstopfungen und Überhitzungen des Flachbohrers reduzieren. Des Weiteren kann die Reibung zwischen der Hauptschneide und dem Werkstück verringert werden, was sich positiv auf den Verschleiß auswirkt. Schließlich kann der positive axiale Spanwinkel auch dazu beitragen, dass der Flachbohrer besser zentriert bleibt, was zu präziseren Bohrungen führt.

Die an die Hauptschneiden angrenzenden Spanflächen im Bereich der Ausspitzungen können jeweils einen axialen Spanwinkel von 0° haben.

Der axiale Spanwinkel von 0° vergrößert den Keilwinkel der Hauptschneide im Bereich der Ausspitzung, wodurch sich die Stabilität der Hauptschneide und damit die Standzeit des Flachbohrers erhöhen kann.

In einer weiteren Ausführungsform weist der Flachbohrer an die Hauptschneiden angrenzende Freiflächen auf, die jeweils aus einer an die Hauptschneide angrenzenden ersten Freifläche und einer an die erste Freifläche anschließenden zweiten Freifläche mit einem größeren Freiwinkel als die erste Freifläche gebildet ist. Die ersten und/oder zweiten Freiflächen können jeweils plan angeschliffene Flächen sein. Alternativ dazu können die an die Hauptschneiden angrenzenden Freiflächen auch kegelmantelförmig angeschliffene Freiflächen sein.

Der im Vergleich zum Freiwinkel der zweiten Freifläche kleinere Freiwinkel der ersten Freifläche ermöglicht einen stabilen Schneidkeil und verringert dadurch Verschleiß und Schwingungen des Flachbohrers. Der größere Freiwinkel der zweiten Freifläche kann hingegen dazu beitragen, die Reibung des Bohrers mit dem Werkstück zu verringern. Des Weiteren lassen sich die beiden Freiflächen unabhängig voneinander nachschleifen.

Der Flachbohrer kann in den Freiflächen liegende Kühlschmiermittelkanalaustrittsöffnungen aufweisen.

Vorteilhaft können die Kühlschmiermittelkanalaustrittsöffnungen in den an den ersten Freiflächen anschließenden zweiten Freiflächen angeordnet sein. Auf diese Weise kann Kühlschmiermittel einerseits zuverlässig an die Hauptschneiden geführt werden und andererseits die Stabilität der Schneidkeile nicht durch die innerhalb der Schneidstege verlaufenden Kühlschmiermittelkanäle beeinträchtigt werden.

In einer weiteren Ausführungsform weist der Flachbohrer wendelförmig verlaufende Spannuten auf.

Vorteilhat ist ein die Wendelform der Spannuten und den Prozess der Spanbildung bestimmender Drallwinkel je nach Anwendung, dem zu bearbeitenden Material und der Bohrgeschwindigkeit gewählt. Der Drallwinkel kann umso größer gewählt werden, je weicher das zu bearbeitende Material ist.

Weitere Einzelheiten, Merkmale und Vorteile ergeben sich aus der nachfolgenden Beschreibung einer Ausführungsformen anhand der Zeichnungen. Es zeigen:
Fig. 1 eine einen Flachbohrer gemäß einer Ausführungsform in einer Seitenansicht;
Fig. 2 eine Vorderansicht des Flachbohrers aus Fig. 1;
Fig. 3 eine Detailansicht des Flachbohrers aus Fig. 2;
Fig. 4 eine Seitenansicht eines Schneidteils des Flachbohrers aus Fig. 1; und
Fig. 5 eine perspektivische Ansicht des Flachbohrers aus Fig. 1.

### Ausführungsform

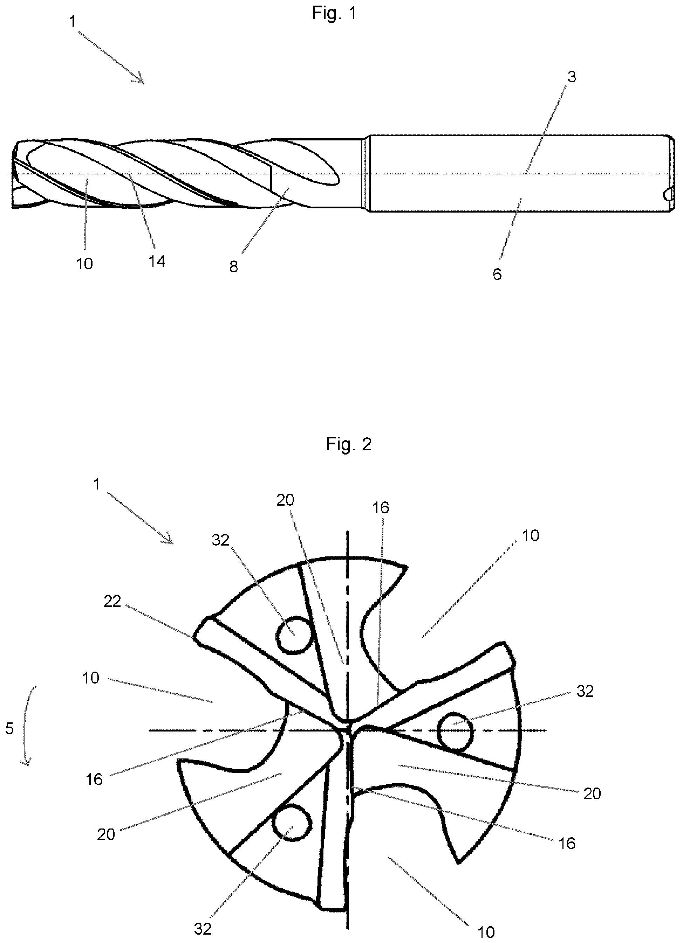

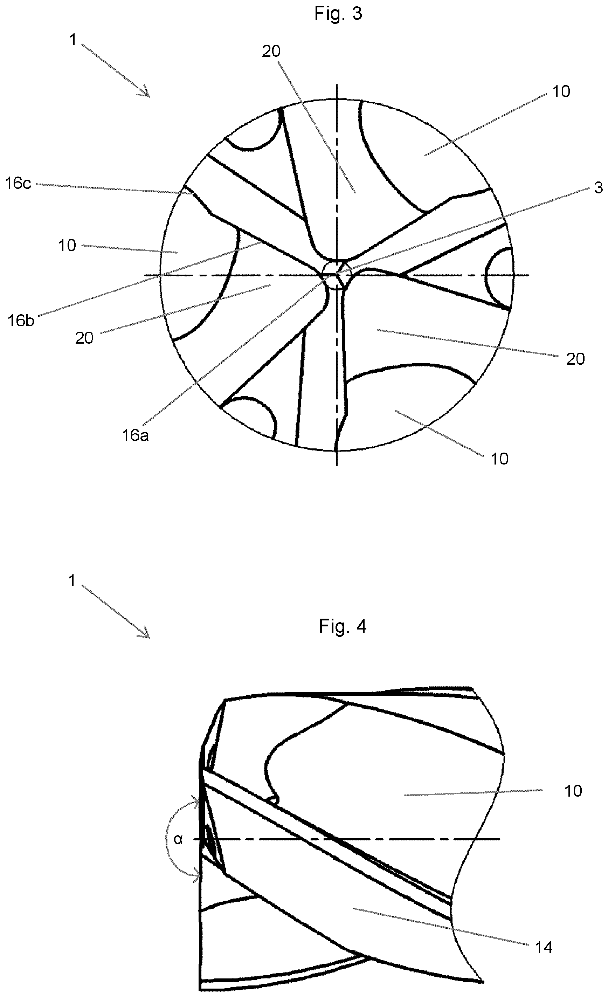

In den Figuren 1 bis 5 ist mit dem Bezugszeichen 1 ein rechtsdrehender dreischneidiger Flachbohrer einer Ausführungsform bezeichnet, der einen sich entlang einer Bohrerachse 3 erstreckenden Werkzeugschaft 6 zum Einspannen in ein Werkzeugfutter sowie einen Schneidteil 8 aufweist. Der Schneidteil 8 weist drei unter einem positiven Drallwinkel verlaufende Spannuten 10 und drei parallel zu den Spannuten 10 von einer Bohrerstirn in Richtung Werkzeugschaft 6 verlaufende Stege 14 auf. Jeder Steg 14 bildet an seinem vorderen stirnseitigen Ende, das in Fig. 1 links dargestellt ist, einen Schneidkeil aus. Der Schneidkeil weist eine Hauptschneide 16 auf, deren Verlauf im Bereich der Bohrermitte bzw. des Bohrerkerns durch eine Ausspitzung 20 korrigiert ist. Der Flachbohrer 1 der Ausführungsform weist somit genau drei Hauptschneiden 16 auf, die an der Bohrerachse 3 zusammenlaufen, wie in Fig. 3 gezeigt ist.

Wie des Weiteren aus den Figuren 2 und 3 ersichtlich ist, weist jede Hauptschneide 16 einen ersten Hauptschneidenabschnitt 16a, der sich ausgehend von der Bohrerachse 3, an der die Hauptschneiden 16 in einem Punkt zusammenlaufen, bis zum Beginn der Ausspitzung 20 erstreckt, einen zum ersten Hauptschneidenabschnitt 16a abgewinkelten zweiten Hauptschneidenabschnitt 16b im Bereich der Ausspitzung 20, sowie einen von der Ausspitzung 20 bis zu einer Schneidenecke 22 (in Fig. 3 nicht vollständig gezeigt) sichelförmig verlaufenden dritten Hauptschneidenabschnitt 16c.

An der Schneidenecke 22 geht die die Hauptschneide 16 bzw. der dritte Hauptschneidenabschnitt 16c in eine für die Bohrungsnachbearbeitung vorgesehene Nebenschneide 24 über, an die in Umfangsrichtung des Flachbohrers 1 eine Führungsfase 26 anschließt.

Die stirnseitigen Hauptschneiden 16 des Flachbohrers 1, die jeweils den ersten Hauptschneidenabschnitt 16a, den zweiten Hauptschneidenabschnitt 16b und den dritten Hauptschneidenabschnitt 16c aufweisen, erstrecken sich in einer Ebene, die auf der Bohrerachse 3 senkrecht steht bzw. quer zur Bohrerachse 3 liegt. Wie insbesondere in Fig. 4 gezeigt, beträgt ein Spitzenwinkel α des Flachbohrers 1 exakt 180°. Aus der Fig. 2 ist des Weiteren ersichtlich, dass die Hauptschneiden 16, in Bohrerdrehrichtung 5 gesehen, jeweils in dem durch die Ausspitzung 20 gestalteten Hauptschneidenabschnitt 16b vor einer die Bohrerachse 3 und die jeweilige Schneidenecke 22 enthaltenden Ebene (nicht gezeigt) ("vor Mitte") und in dem radial äußeren Hauptschneidenabschitt 16c aufgrund des sichelförmigen Verlaufs teilweise hinter der die Bohrerachse 3 und die jeweilige Schneidenecke 22 enthaltenden Ebene (nicht gezeigt) ("hinter Mitte") liegen.

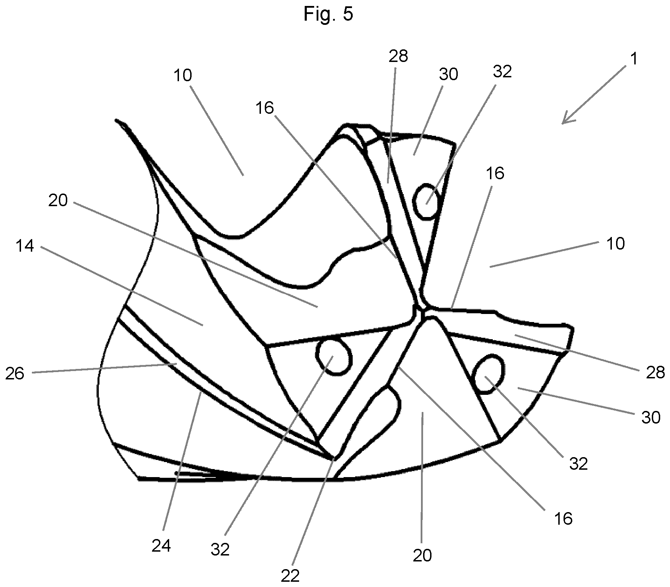

An jede Hauptschneide 16 schließt, entgegen der Drehrichtung des Flachbohrers 1 gesehen, eine erste Freifläche 28 an, die einen ersten Freiwinkel aufweist. Entgegen der Drehrichtung des Flachbohrers 1 schließt eine zweite Freifläche 30 an die erste Freifläche 28 an, deren zweiter Freiwinkel größer als der erste Freiwinkel der ersten Freifläche 28 ist. Wie in den Figuren 2 und 5 gezeigt, mündet in den zweiten Freiflächen 30 jeweils eine Kühlschmiermittelkanalaustrittsöffnung 32 zum Austritt von Kühlschmiermittel zur Kühlung und Schmierung der Hauptschneiden 16 während des Bohrprozesses. Die ersten und zweiten Freiflächen 28 und 30 sind in der gezeigten Ausführungsform jeweils plan angeschliffene Flächen.

In Drehrichtung des Flachbohrers 1 gesehen schließt an jede Hauptschneide 16 eine Spanfläche an, die im Bereich von der Ausspitzung 20 bis zu der Schneidenecke 22, d.h. im Bereich des sichelförmig verlaufenden dritten Hauptschneidenabschnitts 16c, einen positiven axialen Spanwinkel und im Bereich der Ausspitzung 20, d.h. im Beriech des zweiten Hauptschneidenabschnitts 16b, einen axialen Spanwinkel von 0° hat.

Durch das Bereitstellen von genau drei Hauptschneiden 16 wird bei dem Flachbohrer 1 der Ausführungsform die Belastung auf die drei Hauptschneiden 16 verteilt. Im Vergleich zu einem Flachbohrer mit nur zwei Hauptschneiden verringert sich die Belastung je Hauptschneide 16 im Bohrprozess von 50 % auf 33,33 % und nimmt somit je Hauptschneide um 33,33 % ab. Durch die geringere Belastung erhöht sich die Standzeit des Flachbohrers 1 und damit seine Lebensdauer. Des Weiteren kann der Flachbohrer 1 durch die zusätzliche dritte Hauptschneide 16 im Bohrprozess besser zentriert werden, was zu präziseren Bohrungen führt. Schließlich ermöglicht die dritte Hauptschneide 16 schnellere Bohrgeschwindigkeiten und eine effizientere Spanabfuhr, da die zusätzliche Hauptschneide 16 Späne brechen und das Spanmaterial schneller entfernen kann, wodurch das Risiko von Verstopfungen und einer Überhitzung des Flachbohrers 1 verringert wird.

### Bezugszeichenliste

- α: Spitzenwinkel
- 1: Flachbohrer
- 3: Bohrerachse
- 5: Bohrerdrehrichtung
- 6: Werkzeugschaft
- 8: Schneidteil
- 10: Spannut
- 14: Steg
- 16: Hauptschneide
- 16a: erster Hauptschneidenabschnitt
- 16b: zweiter Hauptschneidenabschnitt
- 16c: dritter Hauptschneidenabschnitt
- 20: Ausspitzung
- 22: Schneidenecke
- 24: Nebenschneide
- 26: Führungsfase
- 28: erste Freifläche
- 30: zweite Freifläche
- 32: Kühlschmiermittelkanalaustrittsöffnung

## Patentansprüche

1. Flachbohrer (1) mit einem Schaft (6) und einem Schneidteil (8) mit stirnseitigen Hauptschneiden (16), die sich jeweils in einer Ebene quer zur Bohrerachse (3) von einer Schneidenecke (22) in die Bohrermitte erstrecken, **gekennzeichnet durch**
drei Hauptschneiden (16), die an der Bohrerachse (3) zusammenlaufen.

2. Flachbohrer (1) nach Anspruch 1, **dadurch gekennzeichnet, dass** die Hauptschneiden (16), in Bohrerdrehrichtung (5) gesehen, jeweils zumindest teilweise vor einer die Bohrerachse (3) und die jeweilige Schneidenecke (22) enthaltenden Ebene liegen und der Verlauf der Hauptschneiden (16) im Bereich des Bohrerkerns jeweils durch eine Ausspitzung (20) korrigiert ist.

3. Flachbohrer (1) nach Anspruch 2, **dadurch gekennzeichnet, dass** die Hauptschneiden (16) von den Ausspitzungen (20) in Richtung der Schneidenecken (22) jeweils sichelförmig verlaufen.

4. Flachbohrer (1) nach Anspruch 2 oder 3, **gekennzeichnet durch** an die Hauptschneiden (16) angrenzende Spanflächen, die im Bereich von der Ausspitzung (20) bis zu den Schneidenecken (22) jeweils einen positiven axialen Spanwinkel haben.

5. Flachbohrer (1) nach einem der Ansprüche 2 bis 5, **dadurch gekennzeichnet, dass** die an die Hauptschneiden (16) angrenzenden Spanflächen im Bereich der Ausspitzungen (20) jeweils einen axialen Spanwinkel von 0° haben.

6. Flachbohrer (1) nach einem der vorhergehenden Ansprüche, **gekennzeichnet durch** an die Hauptschneiden (16) angrenzende Freiflächen, die jeweils aus einer an die Hauptschneide (16) angrenzenden ersten Freifläche (28) und einer an die erste Freifläche (28) anschließenden zweiten Freifläche (30) mit einem größeren Freiwinkel als die erste Freifläche (28) gebildet ist.

7. Flachbohrer (1) nach Anspruch 6, **gekennzeichnet durch** in den Freiflächen liegenden Kühlschmiermittelkanalaustrittsöffnungen (32).

8. Flachbohrer (1) nach einem der vorhergehenden Ansprüche, **gekennzeichnet durch** wendelförmig verlaufende Spannuten (10).
